# NEUE EUROPÄISCHE PATENTSCHRIFT

(11) **EP 2 146 172 B2**
(45) Veröffentlichungstag und Bekanntmachung des Hinweises auf die Entscheidung über den Einspruch: **22.07.2015**
(45) Hinweis auf die Patenterteilung: 18.01.2012
(21) Anmeldenummer: 09013924.7
(22) Anmeldetag: 07.11.2007
(51) Int. Cl.: F28D 20/02, F27B 14/00, F27B 15/00

(54) **Ofenanlage zum kontinuierlichen Mischen und Schmelzen anorganischer Salze**
Furnace assembly for continuous mixing and melting of inorganic salts
Installation de four destinée au mélange continu et à la fusion de sels anorganiques

(30) Priorität: 24.03.2007 DE 102007014230
(43) Veröffentlichungstag der Anmeldung: 20.01.2010
(62) Teilanmeldung aus: 07021605.6
(73) Patentinhaber: Durferrit GmbH, 68169 Mannheim (DE)
(72) Erfinder: Michel, Heinrich, 69245 Bammental (DE); Trapp, Hans-Helmut, 63526 Erlensee (DE)
(74) Vertreter: Ruckh, Rainer Gerhard

(56) Entgegenhaltungen:
- JP-A- 11 325 739
- US-A- 4 042 318
- US-A1- 2005 005 646

## Beschreibung

Die Erfindung betrifft eine Ofenanlage zum kontinuierlichen Schmelzen anorganischer Salze.

Geschmolzene anorganische Salze der in Rede stehenden Art werden in unterschiedlichen industriellen Anlagen als Wärmespeichermedium oder Wärmeübertragungsmedium genutzt. Die geschmolzenen anorganischen Salze werden insbesondere zur Speicherung von Wärme in Solarkraftwerken oder anderen Wärmekraftanlagen zur Speicherung überschüssiger Wärme aus Abluftanlagen und zur Wärmeübertragung (Heizen) oder Wärmeabfuhr (Kühlung) in großtechnischen chemischen Reaktoren genutzt.

Geschmolzene Salze haben dabei gegenüber organischen Wärmespeicher- oder Wärmeübertragungsmedien den Vorteil, dass sie eine sehr hohe Wärmekapazität (spezifische Wärme) aufweisen und auch bei hohen Temperaturen aufgrund geringer Zersetzungsneigung und hoher Verdampfungspunkte einsetzbar sind. Weiterhin sind anorganische Salze preiswert und weltweit verfügbar.

Bei der Gewinnung elektrischer Energie in Solarkraftwerken, welche in jüngster Zeit einen erheblichen Aufschwung erfahren hat [Sonne, Wind und Wärme, 11 (2004) 54-56; http://www.flagsol.com/andasol_projects.htm; http://www.solarmillennium.de] sind geschmolzene anorganische Salze als Wärmespeichermedien einsetzbar.

Dabei stellt die Speicherung solartechnisch gewonnener Wärmemengen eine besondere Herausforderung dar, weil die Erzeugung elektrischer Energie auch während der Nacht gewährleistet werden muss.

Zu diesem Zweck werden beispielsweise Gemische aus Kaliumnitrat (KNO3) und Natriumnitrat (NaNO3) im Verhältnis 40/60 Gew. % (Schmelzpunkt ca. 250° C) in flüssiger Form eingesetzt, die in sehr großen, thermisch isolierten Speicherbehältern aufbewahrt werden. Das geschmolzene Salzgemisch wird tagsüber auf eine hohe Temperatur T₁, zum Beispiel 400° C, mit Hilfe der gebündelten Sonnenenergie aufgeheizt und in einem Heiß-Tank gelagert. Über Nacht wird die heiße Salzschmelze aus dem Heiß-Tank entnommen und über ein Wärmtauschersystem geleitet, wobei ein Teil der gespeicherten Wärme zur Gewinnung von Elektrizität mittels Dampfturbinen verbraucht wird. Dabei kühlt sich die Salzschmelze auf eine Temperatur T₂, zum Beispiel 290° C, ab und wird, immer noch flüssig, in einem Kalt-Tank bei ca. 290° C gelagert. Tagsüber wird diese Schmelze durch einen Teil der einstrahlenden Sonnenenergie wieder auf die hohe Temperatur von 400° C erhitzt, in den Heiß-Tank überführt und der Zyklus kann sich wiederholen.

Die Speichertanks kommerzieller Solarkraftwerke mit ca. 50 Megawatt Leistung fassen beispielsweise ungefähr 30.000 Tonnen der Speichersalzschmelze und haben Abmessungen in der Größenordnung von 30 m Durchmesser und 15 bis 20 m Höhe.

Für die Inbetriebnahme eines solchen Wärmespeichersystems muss das Salz beziehungsweise das Salzgemisch mindestens auf die Temperatur des Kalt-Tanks gebracht werden.

Für die Inbetriebnahme des Wärmespeichersystems eines Solarkraftwerks mit etwa 50 Megawatt Leistung bedeutet dies konkret, dass eine Masse von 30.000 Tonnen des oben genannten Kalium- / Natriumnitratgemischs auf 290 - 300° C erhitzt und in einem isolierten Speichertank aufbewahrt werden muss.

Für das Schmelzen so großer Mengen anorganischer Salze beziehungsweise Salzgemische aus den kristallinen Rohstoffen kann man herkömmliche Schmelzöfen oder eine Beheizung im Behälter nicht einsetzen. Das Aufschmelzen einer derartig großen Salzmenge im Behälter würde wegen der schlechten Wärmeleitung der kristallinen Rohstoffe nur zu lokalen Anschmelzungen führen beziehungsweise eine unrealistisch lange Zeitdauer erfordern, bis die gesamte Masse an Salz aufgeschmolzen wäre.

Aus der US 4 042 318 A ist ein Ofen zum Schmelzen von anorganischen Salzen bekannt, der einen inneren und äußeren Tank aufweist, die ineinander geschachtelt angeordnet sind. Zwischen den Wänden des Tanks befindet sich ein Heizmedium. Der Innenraum des inneren Tanks ist durch vertikale Trennwände unterteilt, um den Weg der Schmelze im Tank zu verlängern und dadurch eine Homogenisierung der Schmelze zu bewirken.

Aus JP11325739 ist eine Anlage zum Schmelzen von grossen Mengen an Salz bekannt, wobei der schmelzbehälter für das Salz über einen separaten Salzkreislauf vorgewärmt wird.

Der Erfindung liegt die Aufgabe zugrunde, ein Verfahren und eine Ofenanlage bereitzustellen, mittels derer große Mengen an Salz geschmolzen werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Ofenanlage dient zum kontinuierlichen Mischen und Schmelzen anorganischer Salze. Die Ofenanlage weist eine Zuführeinheit auf, mittels derer eine fortlaufende Zufuhr von festen Salzen in einen Ofen durchgeführt wird. Weiter sind in der Ofenanlage Mittel zum Erhitzen der Salze sowie eine Umwälzeinheit vorgesehen. Diese Umwälzeinheit weist ein Rührwerk oder eine Pumpe mit vertikal nach oben gerichteter Strömungskennlinie auf, wodurch eine Trennung eines Zwei-Phasen-Bereichs aus festem und geschmolzenem Salz und eines zweiten Bereichs von einer auf eine Erwärmungstemperatur erhitzten Schmelze erzeugt wird. Die über die Zuführeinheit zugeführten festen Salze werden über eine Einfüllöffnung in der Decke des Ofens eingeführt, welche im Bereich der mit der Umwälzeinheit generierten Aufwärtsströmung liegt. Weiter ist eine Entnahmeeinheit vorgesehen, mittels derer parallel zur Zufuhr der festen Salze eine Ausleitung von Schmelze aus dem zweiten Bereich durchgeführt wird. Die Ofenanlage weist eine Steuereinheit zur Steuerung der Zufuhr von festem Salz und der Entnahme von Schmelze auf. Zur Messung der über die Zuführeinheit zugeführten Menge an festem Salz ist eine volumetrische und gravimetrische Messeinheit vorgesehen. Zur Messung der über die Entnahmeeinheit abgeführten Menge an Schmelze ist eine Messeinheit zur Bestimmung der Leistungsaufnahme der Entnahmeeinheit oder zur Bestimmung der Strömungsgeschwindigkeit der Schmelze vorgesehen.

Erfindungsgemäß erfolgt fortlaufend die Zufuhr von festen Salzen oder Salzgemischen in den Ofen der Ofenanlage und parallel hierzu, ebenfalls fortlaufend die Ausfuhr von Schmelze, das heißt geschmolzenem Salz. Die erfindungsgemäße Ofenanlage bildet somit ein Durchflusssystem, welches es ermöglicht, auch sehr große Mengen von Salz zu schmelzen.

Eine wesentliche Voraussetzung für die Funktion des erfindungsgemäßen Systems ist dabei die Trennung eines Zwei-Phasen-Bereichs aus festem und geschmolzenem Salz von einem zweiten Bereich mit der auf eine Erwärmungstemperatur erhitzten Schmelze. Dadurch ist gewährleistet, dass die über die Entnahmeeinheit aus dem zweiten Bereich entnommene Schmelze keine Bestandteile von nicht geschmolzenem Salz enthält, das heißt das zugeführte feste Salz wird im Zwei-Phasen-Bereich gehalten.

Ein wesentlicher Vorteil der Erfindung besteht darin, dass die Trennung des Bereichs der Schmelze von dem Zwei-Phasen-Bereich, in welchem die festen Salze enthalten sind, durch strömungstechnische Maßnahmen gewährleistet werden kann, so dass der mechanische Aufwand hierfür sehr gering gehalten werden kann.

Erfindungsgemäß wird mit der Umwälzeinheit im Zentrum des Ofens eine vertikal nach oben gerichtete, bevorzugt laminare Strömung erzeugt, mittels derer die über die Zuführeinheit zugeführten festen Salze in dem Zwei-Phasen-Bereich gehalten werden. Eine solche Strömung wird mit einer Umwälzeinheit in Form eines Rührwerks oder einer Pumpe generiert. Zusätzlich kann im Bodenbereich des Ofens eine Düsenanordnung vorgesehen sein, mittels derer ein nach oben gerichteter Gasstrom in den Ofen einleitbar ist. Zum Unterstützen dieser Strömung können vorteilhaft Leitelemente in den Ofen eingebracht werden. Im einfachsten Fall ist ein solches Leitelement von einem oben und unten offenen Leitzylinder gebildet, der die Umwälzeinheit umgibt und dessen Symmetrieachse vorzugsweise koaxial zur Symmetrieachse des Ofens ist. Die in vertikaler Richtung nach oben gerichtete Strömung wird durch den umgebenden Leitzylinder gebündelt und verstärkt. Der obere Rand des Leitzylinders wirkt zudem als Umlenkmittel, denn die über den Rand nach oben strömende Masse wird an diesem umgelenkt und strömt dann im Randbereich des Ofens nach unten.

Diese Strömung unterstützt weiterhin die Trennung des Bereichs der Schmelze vom Zwei-Phasen-Bereich. Dies beruht darauf, dass im zentralen Bereich des Ofens über die Zuführeinheit vorzugsweise über die Decke des Ofens zugeführte feste Salze zunächst in den Bereich der mit der Umwälzeinheit generierten Aufwärtsströmung gelangen und so in dem Zwei-Phasen-Bereich gehalten werden. Auch nach Umlenkung am oberen Rand des Zylinders bleiben die strömenden Partikel noch im Zwei-Phasen-Bereich. Durch die sich dadurch ergebende lange Verweilzeit der festen Salze im Zwei-Phasen-Bereich ist gewährleistet, dass diese vollständig geschmolzen sind, bis sie in den unterhalb des Zwei-Phasen-Bereichs liegenden zweiten Bereich gelangen. Somit ist gewährleistet, dass sich im zweiten Bereich eine reine Schmelze ohne feste Salze befindet.

Aus diesem Bereich erfolgt die Ausleitung der auf die gewünschte Erwärmungstemperatur erhitzten Schmelze. Im einfachsten Fall kann hierzu im Bodenbereich ein Auslass in Form eines Ventils vorgesehen sein, so dass die Schmelze dort entnommen werden kann. Aus Handhabungs- und Platzgründen ist es jedoch oft wünschenswert, den Auslass der Schmelze ebenso wie die Zufuhr der festen Salze über die Decke vorzunehmen. In diesem Fall werden zweckmäßig sondenartige, von oben in den zweiten Bereich ragende Entnahmeeinheiten wie Flüssigkeitsheber, insbesondere Mammutpumpen, eingesetzt.

Zur Kontrolle des Betriebs der Ofenanlage ist vorteilhaft eine Steuereinheit vorgesehen. In Abhängigkeit von in geeigneten Messsystemen generierten Eingangsgrößen wird mit der Steuereinheit sowohl die Zufuhr an festem Salz als auch die Entnahme an Schmelze gesteuert. Dabei kann sowohl die Zufuhr als auch die Entnahme kontinuierlich oder quasi kontinuierlich, das heißt in vorgegebenen Zeitintervallen erfolgen. Die Steuerung erfolgt bevorzugt derart, dass während des Betriebs der Ofenanlage die im Ofen enthaltene Masse an Salzen zumindest näherungsweise konstant bleibt. Weiterhin wird die Steuerung so durchgeführt, dass verhindert wird, dass ein Überschuss an festen Salzen im Verhältnis zum Anteil an Schmelze im Ofen entsteht.

In der erfindungsgemäßen Ofenanlage werden bevorzugt Salzgemische geschmolzen, wobei diese Schmelzen bevorzugt als Wärmespeicher- oder Wärmeübertragungsmedium in Anlagen wie zum Beispiel Solarkraftwerken genutzt werden können. Die einzelnen Salze können über die Zuführeinheit getrennt oder vorgemischt in den Ofen eingeführt werden. Die Umwälzeinheit sorgt innerhalb des Ofens für eine vollständige Durchmischung der einzelnen Komponenten, das heißt zur Mischung der Komponenten brauchen keine separaten Einheiten vorgesehen sein.

Die Erfindung wird im Nachstehenden anhand der Zeichnungen erläutert. Es zeigen:
- Figur 1:: Längsschnitt durch eine Ausfuhrungsform einer Ofenanlage zum Schmelzen und Mischen anorganischer Salze.
- Figur 2:: Querschnitt durch die Ofenanlage gemäß Figur 1.

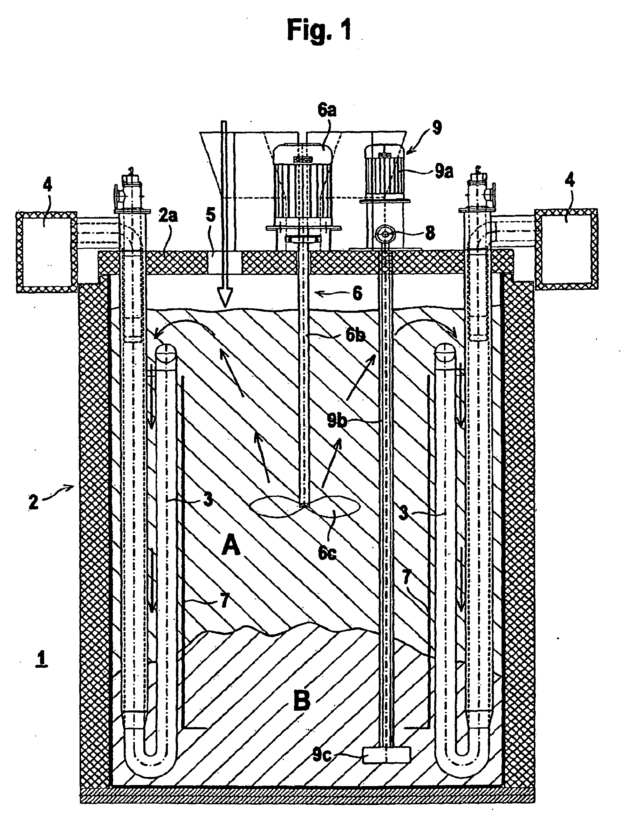

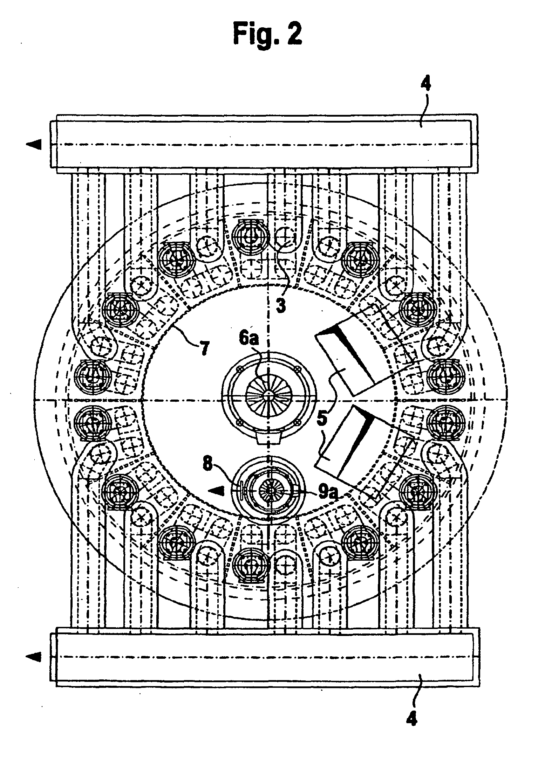

Die Figuren 1 und 2 zeigen ein Ausführungsbeispiel einer Ofenanlage 1 zum kontinuierlichen Mischen und Schmelzen von anorganischen Salzen. Im vorliegenden Fall erfolgt in der Ofenanlage 1 ein Schmelzen eines Salzgemischs aus Kalium- und Natriumnitrat im Verhältnis von 40/60 Gew. %. Die Ofenanlage 1 umfasst einen Ofen 2, in dem das Salzgemisch auf eine Erwärmungstemperatur von etwa 290° C erhitzt wird. Der Schmelzpunkt des Salzgemischs liegt bei 250° C.

Der Ofen 2 besteht im wesentlichen aus einem kreiszylindrischen Tiegel, der das Salzgemisch in seinem Innenraum aufnimmt. Zur Beheizung des Salzgemischs sind im vorliegenden Fall gasbefeuerte Rohrheizkörper 3, sogenannte Strahlungsrohre vorgesehen, welche zur Ableitung des Gases an Abgasrohre 4 angeschlossen sind. Die Rohrheizkörper 3 befinden sich im Innenraum des Ofens 2 und bilden dort eine ringförmige, zum Zentrum des Ofens 2 drehsymmetrische Anordnung. Dabei sind die Rohrheizkörper 3 dicht vor den Innenseiten der Seitenwände des Ofens 2 angeordnet.

Alternativ oder zusätzlich kann der Ofen 2 auch durch außerhalb des Ofens 2 angeordnete Heizelemente beheizt werden. Generell kann die Beheizung des Ofens 2 mittels Gas, Öl, Schweröl oder elektrischer Energie erfolgen.

Die Zugabe von kristallinem oder geprilltem Salz erfolgt über Einfüllöfmungen 5 in der Decke 2a des Ofens 2. Die Zufuhr der festen Salze erfolgt über eine nicht gesondert dargestellte Zuführeinheit, die von Dosierschnecken, Vibrationsdosiereinrichtungen, Bandförderern oder Kettenförderern gebildet sein kann. Die einzelnen Salze können getrennt oder vorgemischt über die Zuführeinheit in den Ofen 2 eingeführt werden.

In dem Ofen 2 ist weiter eine Umwälzeinheit integriert, mittels derer die vollständige Durchmischung der in den Ofen 2 eingeführten Salze erfolgt. Die Umwälzeinheit ist im vorliegenden Fall von einem Rührwerk 6 gebildet, das einen auf der Decke 2a des Ofens 2 aufsitzenden Antrieb 6a und eine von diesem ausgehende, in den Ofen 2 ragende, Welle 6b aufweist, an deren freiem Ende ein Rührwerkzeug 6c angeordnet ist, welches über den Antrieb 6a in eine Drehbewegung versetzt wird. Die Welle 6b verläuft in der Symmetrieachse des Ofens 2. Anstelle eines Rührwerks kann auch eine Pumpe eingesetzt werden. Alternativ oder zusätzlich kann die Umwälzeinheit eine im Bodenbereich des Ofens 2 angeordnete Düsenanordnung aufweisen, mittels derer im Ofen 2 ein vertikal nach oben gerichteter Gasstrom, vorzugsweise Luftstrom, erzeugt wird. Die Düsenanordnung ist bevorzugt symmetrisch zur Symmetrieachse des Ofens 2 ausgebildet.

Allgemein wird mit der Umwälzeinheit innerhalb des Ofens 2 eine laminare und vertikal nach oben gerichtete Strömung erzeugt. Zur Verstärkung und Unterstützung dieser Strömung ist als Leitelement ein an der Ober- und Unterseite offener Leitzylinder 7 vorgesehen, welcher koaxial zur Welle 6b des Rührwerks 6 angeordnet ist. Die Richtung der mit der Umwälzeinheit generierten Strömung ist in Figur 1 mit Pfeilen gekennzeichnet. Im Zentrum des Ofens 2, innerhalb des Leitzylinders 7 wird die vertikal nach oben gerichtete Strömung generiert. Das nach oben strömende Salzgemisch umströmt den oberen Rand des Leitzylinders 7. Dort erfolgt eine Umlenkung der Strömung, so dass in den Randbereichen des Ofens 2 eine abwärts gerichtete Strömung entsteht.

Mittels der durch die Umwälzeinheit generierten Strömung erfolgt nicht nur die vollständige Durchmischung des Salzgemischs. Zudem erfolgt dadurch eine Trennung eines Zwei-Phasen-Bereichs aus festem und geschmolzenem Salz (in Figur 1 bezeichnet mit A) von einem darunter liegenden zweiten Bereich mit homogener und vollständig durchmischter Schmelze (in Figur 1 bezeichnet mit B). Diese Trennung wird deshalb erzielt, da die festen Salze über die Einfüllöffnungen 5 im Bereich der aufwärts gerichteten Strömung in den Ofen 2 eingeleitet werden. Durch diese aufwärts gerichtete Strömung werden die festen Salze im Zwei-Phasen-Bereich gehalten und können vollständig schmelzen, bevor sie über die Abwärtsströmung in den Randbereichen des Ofens 2 in den zweiten Bereich gelangen können.

Die Trennung der beiden Bereiche kann durch die Richtung und Stärke, das heißt Geschwindigkeit der Strömung gezielt vorgegeben werden. Einstellparameter hierfür sind im vorliegenden Fall die Dimensionierung des Rührwerks 6 und des Leitzylinders 7.

Die Schmelze wird aus dem zweiten Bereich mittels einer Entnahmeeinheit ausgeleitet. Im einfachsten Fall kann hierzu im Bodenbereich des Ofens 2 ein Ventil angeordnet sein, über welches die Schmelze ausgeleitet wird. Im vorliegenden Fall ist die Entnahmeeinheit so ausgebildet, dass die Schmelze über eine Auslassöffnung 8 an der Decke 2a des Ofens 2 ausgeführt wird. Die Entnahmeeinheit kann in Form eines Flüssigkeitshebers, wie zum Beispiel einer Mammutpumpe, ausgebildet sein. Im vorliegenden Fall ist die Entnahmeeinheit als Kreiselpumpe 9 ausgebildet. Diese weist einen Antrieb 9a auf, sowie wenigstens ein Rohr 9b in welches über eine Sonde 9c Schmelze aus dem Bodenbereich des Ofens 2 eingeführt und dann nach oben abgepumpt wird.

Der Betrieb der Ofenanlage 1 wird über eine nicht dargestellte zentrale Steuereinheit gesteuert. Zunächst erfolgt mittels der Steuereinheit eine Temperatursteuerung, um die Schmelze auf die gewünschte Erwärmungstemperatur zu erhitzen. Als Temperaturmesseinheit sind innerhalb des Ofens 2 Thermoelemente vorgesehen, um insbesondere im zweiten Bereich die Temperatur der Schmelze zu erfassen. In Abhängigkeit der Messwerte der Thermoelemente wird die Heizleistung der Rohrheizkörper 3 gesteuert.

Weiterhin erfolgt mittels der Steuereinheit die Steuerung der über die pro Zeiteinheit zugeführten Menge an festen Salzen sowie die pro Zeiteinheit ausgeleiteten Menge an homogener Schmelze. Die Ofenanlage 1 wird dabei derart in einem Durchflussbetrieb betrieben, dass parallel fortlaufend eine Zufuhr von festen Salzen in den Ofen 2 und eine Ausleitung von Schmelze aus dem Ofen 2 erfolgt. Die Zufuhr- und Ausleitungsprozesse können kontinuierlich oder quasikontinuierlich, das heißt innerhalb vorgegebener Zeitintervalle erfolgen.

Als erste Eingangsgrößen für die Steuerung werden die über die Zuführeinheit pro Zeiteinheit dem Ofen 2 zugeführten Massen an festem Salz bestimmt. Als zweite Eingangsgröße für die Steuerung wird die über die Entnahmeeinheit pro Zeiteinheit ausgeführte Masse der Schmelze bestimmt. Im vorliegenden Fall wird hierzu die Leistungsaufnahme der Kreiselpumpe 9 bestimmt. Generell kann auch die Strömungsgeschwindigkeit der ausgeleiteten Schmelze als Messgröße bestimmt werden. Schließlich wird als weitere Eingangsgröße das Gesamtgewicht des Ofens 2 mit der darin enthaltenen Schmelze bestimmt. Hierzu ist eine Wägeeinheit, beispielsweise in Form von Wägezellen vorgesehen.

Die Zuführeinheit und die Entnahmeeinheit werden über die Steuereinheit so gesteuert, dass das Gewicht des Ofens 2 und damit die Masse der im Ofen 2 enthaltenen Schmelze zumindest näherungsweise konstant bleibt.

Weiterhin erfolgt mittels der Steuereinheit die Steuerung der Zuführeinheit und der Entnahmeeinheit derart, dass die pro Zeiteinheit zugeführten Massen an Salzen und die pro Zeiteinheit ausgeleitete Masse an Schmelze bezogen auf die Gesamtmasse im Ofen 2 im Verhältnis zur Zeit die benötigt wird, die festen Salze zu schmelzen, einen vorgegebenen Grenzwert nicht überschreitet. Damit wird verhindert, dass zuviel festes Salz in den Ofen 2 eingefüllt wird, was zu einer unerwünschten Beeinträchtigung des zweiten Bereichs der homogenen Schmelze im Ofen 2 führen würde.

Für das vorliegende Ausführungsbeispiel und ein typisches Fassungsvermögen des Ofens 2 in der Größenordnung von 60 Tonnen hat es sich als vorteilhaft erwiesen, wenn die pro Stunde zugeführte Masse an festen Salzen und die gleichzeitig dem Ofen 2 pro Stunde entnommene Masse an Schmelze 100 Gew. % (das heißt eine komplette Ofenfüllung), vorzugsweise 25 Gew. % des Inhalts des Ofens 2 nicht überschreiten. Im vorliegenden Fall erfolgt die Steuerung derart, dass die pro Stunde zugeführte Masse an Salzen sowie die pro Stunde abgepumpte Masse an Schmelze jeweils 15 Tonnen beträgt.

### Bezugszeichenliste

- (1): Ofenanlage
- (2): Ofen
- (2a): Decke
- (3): Rohrheizkörper
- (4): Abgasrohr
- (5): Einfüllöffnung
- (6): Rührwerk
- (6a): Antrieb
- (6b): Welle
- (6c): Rührwerkzeug
- (7): Leitzylinder
- (8): Auslassöffnung
- (9): Kreiselpumpe
- (9a): Antrieb
- (9b): Rohr
- (9c): Sonde

## Patentansprüche

1. Ofenanlage (1) zum kontinuierlichen Mischen und Schmelzen anorganischer Salze mit einer Zuführeinheit, mittels derer eine fortlaufende Zufuhr von festen Salzen in einen Ofen (2) durchgeführt wird und mit Mitteln zum Erhitzen der Salze im Ofen (2), **dadurch gekennzeichnet, dass** eine Umwälzeinheit vorgesehen ist, die ein Rührwerk (6) oder eine Pumpe mit vertikal nach oben gerichteter Strömungskennlinie aufweist, wodurch eine Trennung eines Zwei-Phasen-Bereichs aus festem und geschmolzenem Salz und eines zweiten Bereichs von einer auf eine Erwärmungstemperatur erhitzten Schmelze erzeugt wird, wobei die über die Zuführeinheit zugeführten festen Salze über eine Einfüllöffnung (5) in der Decke (2a) des Ofens (2) eingeführt werden, welche im Bereich der mit der Umwälzeinheit generierten Aufwärtsströmung liegt, und dass eine Entnahmeeinheit vorgesehen ist, mittels derer parallel zur Zufuhr der festen Salze eine Ausleitung von Schmelze aus dem zweiten Bereich durchgeführt wird, und dass die Ofenanlage (1) eine Steuereinheit zur Steuerung der Zufuhr von festem Salz und der Entnahme von Schmelze aufweist, wobei zur Messung der über die Zuführeinheit zugeführten Menge an festem Salz eine volumetrische und gravimetrische Messeinheit vorgesehen ist, und wobei zur Messung der über die Entnahmeeinheit abgeführten Menge an Schmelze eine Messeinheit zur Bestimmung der Leistungsaufnahme der Entnahmeeinheit oder zur Bestimmung der Strömungsgeschwindigkeit der Schmelze vorgesehen ist.

2. Ofenanlage nach Anspruch 1, **dadurch gekennzeichnet, dass** die Umwälzeinheit eine Düsenanordnung im Bodenbereich des Ofens (2) aufweist, wobei mittels der Düsenanordnung ein vertikal nach oben gerichteter Gasstrom in den Ofen (2) einleitbar ist.

3. Ofenanlage nach einem der Ansprüche 1 oder 2, **dadurch gekennzeichnet, dass** die Umwälzeinheit im Zentrum des Ofens (2) angeordnet ist.

4. Ofenanlage nach Anspruch 3, **dadurch gekennzeichnet, dass** mittels Leitelementen in den Randbereichen eine abwärts gerichtete Strömung generiert wird.

5. Ofenanlage nach einem der Ansprüche 1 bis 4, **dadurch gekennzeichnet, dass** zur Beheizung des Ofens (2) in dessen Innenraum und/oder an dessen Außenseite Heizelemente vorgesehen sind, wobei die Beheizung des Ofens (2) mittels Gas, Öl, Schweröl oder elektrischer Energie erfolgt.

6. Ofenanlage nach Anspruch 5, **dadurch gekennzeichnet, dass** innerhalb des Ofens (2) angeordnete Heizelemente von gasbefeuerten Rohrheizkörpem (3) gebildet sind.

7. Ofenanlage nach Anspruch 6, **dadurch gekennzeichnet, dass** der Ofen (2) einen kreisförmigen Querschnitt aufweist, und dass die Rohrheizkörper (3) ringförmig im Randbereich des Ofens (2) angeordnet sind.

8. Ofenanlage nach einem der Ansprüche 1 bis 7, **dadurch gekennzeichnet, dass** als Zuführeinheit Dosierschnecken, Vibrationsdosiereinrichtungen, Bandförderer oder Kettenförderer vorgesehen sind.

9. Ofenanlage nach einem der Ansprüche 1 bis 8, **dadurch gekennzeichnet, dass** als Entnahmeeinheit ein Flüssigkeitsheber vorgesehen ist mittels dessen Schmelze aus dem zweiten Bereich, insbesondere aus dem Bodenbereich des Ofens (2) entnommen wird.

10. Ofenanlage nach Anspruch 9, **dadurch gekennzeichnet, dass** der Antrieb des Flüssigkeitshebers und die Auslassöffnung (8) zur Ausleitung der Schmelze oberhalb der Decke (2a) des Ofens (2) angeordnet sind.

11. Ofenanlage nach einem der Ansprüche 1 bis 10, **dadurch gekennzeichnet, dass** als Entnahmeeinheit eine Kreiselpumpe (9) vorgesehen ist.

12. Ofenanlage nach einem der Ansprüche 1 bis 11, **dadurch gekennzeichnet, dass** eine Wägeeinheit zur Bestimmung des Gewichts des mit Salzen erfüllten Ofens (2) vorgesehen ist.

13. Ofenanlage nach einem der Ansprüche 1 bis 12, **dadurch gekennzeichnet, dass** eine Temperaturmesseinheit zur Bestimmung der Temperaturen in den beiden Bereichen innerhalb des Ofens (2) vorgesehen ist.

## Claims

1. Furnace assembly (1) for continuous mixing and melting of inorganic salts, comprising a feed unit by means of which a continuous feed of solid salts to a furnace (2) is carried out and means for heating the salts in the furnace (2), **characterised in that** a circulating unit is provided which comprises an agitator (6) or a pump with vertically upwardly directed flow profile, whereby a separation of a two-phase region of solid and molten salt and a second region from a melt heated to a heating temperature is produced, wherein the solid salts fed by way of the feed unit are introduced by way of a filling opening (5) in the cover (2a) of the furnace (2), which lies in the region of the upward flow generated by the circulating unit, and that an extraction unit is provided by means of which conducting of melt out of the second region is carried out parallelly to the feed of the solid salts, and that the furnace assembly (1) comprises a control unit for control of the feed of solid salt and extraction of melt, wherein a volumetric and gravimetric measuring unit is provided for measuring the quantity of solid salt fed by way of the feed unit and wherein a measuring unit for determination of the power consumption of the extraction unit or for determination of the flow speed of the melt is provided for measuring of the quantity of melt discharged by way of the extraction unit.

2. Furnace assembly according to claim 1, **characterised in that** the circulating unit comprises a nozzle arrangement in the base region of the furnace (2), wherein a vertically upwardly directed gas flow is introducible into the furnace (2) by means of the nozzle arrangement.

3. Furnace assembly according to one of claims 1 and 2, **characterised in that** the circulating unit is arranged in the centre of the furnace (2).

4. Furnace assembly according to claim 3, **characterised in that** a downwardly directed flow is generated by means of guide elements in the edge regions.

5. Furnace assembly according to any one of claims 1 to 4, **characterised in that** for heating the furnace (2) heating elements are provided in the interior space thereof and/or at the outer side thereof, wherein the heating of the furnace (2) is carried out by means of gas, oil, heavy oil or electrical energy.

6. Furnace assembly according to claim 5, **characterised in that** heating elements arranged within the furnace (2) are formed by gas-fired tubular heating bodies (3).

7. Furnace assembly according to claim 6, **characterised in that** the furnace (2) has a circular cross-section and that the tubular heating bodies (3) are arranged annularly in the edge region of the furnace (2).

8. Furnace assembly according to any one of claims 1 to 7, **characterised in that** metering worms, vibration metering devices, belt conveyors or chain conveyors are provided as feed unit.

9. Furnace assembly according to any one of claims 1 to 8, **characterised in that** a liquid siphon is provided as extraction unit, by means of which melt is removed from the second region, particularly from the base region of the furnace (2).

10. Furnace assembly according to claim 9, **characterised in that** the drive of the liquid siphon and the outlet opening (8) are arranged for conducting out of the melt above the cover (2a) of the furnace (2).

11. Furnace assembly according to any one of claims 1 to 10, **characterised in that** a centrifugal pump is provided as extraction unit.

12. Furnace assembly according to any one of claims 1 to 11, **characterised in that** a weighing unit is provided for determination of the weight of the furnace (2) filled with salt.

13. Furnace assembly according to any one of claims 1 to 12, **characterised in that** a temperature measuring unit is provided for determination of the temperatures in the two regions within the furnace (2).

## Revendications

1. Installation de four (1) permettant le mélange et la fusion en continu de sels inorganiques, comportant une unité de chargement au moyen de laquelle est réalisé un apport continu de sels solides dans un four (2), et des moyens permettant de chauffer les sels dans le four (2), **caractérisée en ce qu'**est prévue une unité de circulation ou de brassage qui présente un mélangeur (6) ou une pompe avec caractéristique d'écoulement de flux orientée verticalement et vers le haut, par laquelle une séparation d'une zone à deux phases d'un sel solide et fondu et d'une seconde zone d'une masse fondue chauffée à une température d'échauffement est générée, les sels solides amenés par l'unité de chargement étant introduits par une ouverture de remplissage (5) dans le plafond (2a) du four (2), qui se situe dans la zone du courant ascendant généré par l'unité de circulation ou de brassage, et **en ce qu'**est prévue une unité de prélèvement au moyen de laquelle une sortie de la matière fondue hors de la seconde zone se fait parallèlement à l'entrée des sels solides, et **en ce que** l'installation de four (1) présente une unité de commande permettant de commander l'apport de sel solide et le prélèvement de matière fondue, où pour mesurer la quantité de sel solide amenée par l'unité de chargement, on prévoit un équipement de mesure volumétrique et gravimétrique, et où pour mesurer la quantité de matière fondue qui sort par l'unité de prélèvement, on prévoit un équipement de mesure permettant de déterminer la puissance absorbée de l'unité de prélèvement ou de déterminer la vitesse d'écoulement de la matière fondue.

2. Installation de four selon la revendication 1, **caractérisée en ce que** l'unité de circulation ou de brassage présente un agencement de buses dans la zone de fond du four (2), un courant de gaz orienté verticalement vers le haut pouvant être introduit dans le four (2) au moyen de l'agencement de buses.

3. Installation de four selon l'une des revendications 1 ou 2, **caractérisée en ce que** l'unité de circulation ou de brassage est disposée au centre du four (2).

4. Installation de four selon la revendication 3, **caractérisée en ce que** l'on génère un courant orienté vers le bas au moyen d'éléments directeurs dans les zones de bordure.

5. Installation de four selon l'une des revendications 1 à 4, **caractérisée en ce que** pour le chauffage du four (2) sont prévus dans son espace intérieur et/ou au niveau de sa face externe des éléments chauffants, le chauffage du four (2) se faisant au moyen de gaz, d'essence ou pétrole, de fuel ou d'énergie électrique.

6. Installation de four selon la revendication 5, **caractérisée en ce que** les éléments chauffants disposés à l'intérieur du four (2) sont formés par des corps chauffants tubulaires (3) chauffés au gaz.

7. Installation de four selon la revendication 6, **caractérisée en ce que** le four (2) présente une section circulaire et **en ce que** les corps chauffants tubulaires (3) sont disposés en anneau dans la zone de bordure du four (2).

8. Installation de four selon l'une des revendications 1 à 7, **caractérisée en ce que** sont prévus, en tant qu'unité de chargement, des vis sans fin de dosage, des dispositifs de dosage à vibration, des transporteurs à bande ou des transporteurs à chaîne.

9. Installation de four selon l'une des revendications 1 à 8, **caractérisée en ce qu'**est prévu en tant qu'unité de prélèvement un élévateur de liquide au moyen duquel la matière fondue est prélevée de la seconde zone, en particulier de la zone de fond du four (2).

10. Installation de four selon la revendication 9, **caractérisée en ce que** l'entraînement de l'élévateur de liquide et l'ouverture de sortie (8) destinée à la sortie de la matière fondue sont disposés au-dessus du plafond (2a) du four (2).

11. Installation de four selon l'une des revendications 1 à 10, **caractérisée en ce que** l'on prévoit en tant qu'unité de prélèvement une pompe centrifuge (9).

12. Installation de four selon l'une des revendications 1 à 11, **caractérisée en ce que** l'on prévoit un équipement de pesée pour déterminer la masse du four (2) chargé des sels.

13. Installation de four selon l'une des revendications 1 à 12, **caractérisée en ce que** l'on prévoit un équipement de mesure de la température pour déterminer les températures des deux zones à l'intérieur du four (2).
